# EUROPÄISCHE PATENTSCHRIFT

(11) **EP 0 644 353 B1**
(45) Veröffentlichungstag und Bekanntmachung des Hinweises auf die Patenterteilung: **23.04.1997**
(21) Anmeldenummer: 94110697.3
(22) Anmeldetag: 09.07.1994
(51) Int. Cl.: F16F 13/14, B60G 7/02

(54) **Hydraulisch dämpfende Hülsengummifeder in einem Kraftfahrzeug**
Hydraulically damped rubber bushing in a motor vehicle
Manchon élastique à amortissement hydraulique pour véhicule automobile

(30) Priorität: 15.09.1993 DE 4331292
(43) Veröffentlichungstag der Anmeldung: 22.03.1995
(73) Patentinhaber: LEMFOERDER METALLWAREN AG., D-49441 Lemförde (DE)
(72) Erfinder: Vossel, Andreas, D-49086 Osnabrück (DE); Sprang, Rüdiger, D-49179 Ostercappeln (DE)

(56) Entgegenhaltungen:
- EP-A- 0 285 696
- EP-A- 0 529 629
- EP-A- 0 617 211

## Beschreibung

Die Erfindung bezieht sich auf eine hydraulisch dämpfende Hülsengummifeder nach dem Oberbegriff des Patentanspruches 1. Eine derartige Hülsengummifeder ist aus der DE 40 20 713 -C2- bekannt.

Weiterhin ist es aus dieser Schrift bekannt, eine Außenhülse ringsumlaufend mit Rillen oder anderen vergleichbaren Geometrien zu profilieren, um dadurch radiale Atmungsbewegungen zu beeinflussen.

Eine ebenfalls solche Ausbildungsmerkmale aufweisende Hülsengummifeder ist aus der DE 28 41 505 -C2- bekannt. Das sowohl am Außenmantel als auch am Innenmantel glatte Außenrohr dichtet die Flüssigkeitskammern nach außen ab und wird in die Aufnahmebohrung eines Kraftfahrzeugteils, zum Beispiel in einen Fahrzeugquerlenker, eingepreßt. Um dabei eine nötige Auspreßkraft zu gewährleisten, weist das Außenrohr einen gegenüber dem Innendurchmesser der Aufnahmebohrung etwas größeren Außendurchmesser auf, so daß die Hülsengummifeder nach dem Einpressen im Preßsitz in dem Fahrzeugteil gehalten wird. Dies hat jedoch zur Folge, daß das Außenrohr bei dem Einpreßvorgang im Außendurchmesser reduziert wird und somit auch das Volumen der Flüssigkeitskammern in dem Gummikörper. Dadurch geht die sorgfältige Abstimmung der Hülsengummifeder auf optimale Betriebsbedingungen verloren. Durch die inkompressible Flüssigkeit werden zum Volumenausgleich die Kammerwände des Gummikörpers ausgebeult, so daß diese dem inneren Flüssigkeitsdruck in den Flüssigkeitskammern die Eigensteifigkeit des Werkstoffes entgegensetzen. Dadurch steht die Hülsengummifeder unter einem inneren Vordruck. Es ändert sich dadurch aber auch die Beulsteifigkeit, so daß es zu einer Verschiebung des Dämpfungsmaximums der Hülsengummifeder kommt. Außerdem kann bei dem Einpressen des Außenrohres in die Aufnahmebohrung der Drosselkanal verquetscht werden, wodurch es ebenfalls zu einer Verschiebung des Dämpfungsmaximums kommen kann.

Die Aufgabe der Erfindung besteht darin, das Außenrohr in der Weise auszubilden, daß es beim Einpressen des Außenrohres in die Aufnahmebohrung des Fahrzeugteils nicht zu einer unkontrollierten Durchmesserverringerung des Außenrohres und auch nicht zu einer Verquetschung des Drosselkanals kommen kann.

Die Erfindung löst diese Aufgabe durch die Merkmale des Anspruchs 1.

Erreicht wird dadurch der angestrebte feste Sitz des Außenrohres in der Aufnahmebohrung des Fahrzeugteils unter Vermeidung der weiter oben geschilderten Nachteile. Überstehender Werkstoff des im Außendurchmesser gegenüber dem Innendurchmesser der Aufnahmebohrung im Fahrzeugteil leicht vergrößerten Außenrohres kann beim Einpressen des Außenrohres seitlich in die Längsnuten abfließen, so daß im Innern des Außenrohres kontrollierte Verformungen stattfinden.

Bei der Erfindung ist der Kontakt des eingepreßten Außenrohres mit der Wandung der Aufnahmebohrung lediglich linienförmig mit zwischen den linienförmigen Berührungen liegenden Freiräumen ausgebildet. Dazu sind die längsverlaufenden Riefen, Rillen oder Nuten an der Außenfläche eines Außenrohres aus Aluminium besonders vorteilhaft.

Auf der Zeichnung ist ein Ausführungsbeispiel der Erfindung dargestellt. Es zeigen:
- Figur 1: einen Schnitt durch eine Hülsengummifeder in einer Achsebene,
- Figur 2: einen Querschnitt durch eine Hülsengummifeder nach Linie II - II in Figur 1,
- Figuren 3,4 + 5: Querschnittssegmente verschiedener Ausbildungen des Außenrohres und
- Figuren 6 und 7: eine Gegenüberstellung der Verschiebung des Dämpfungsmaximums einer bekannten Ausführung und einer Ausführung nach der Erfindung.

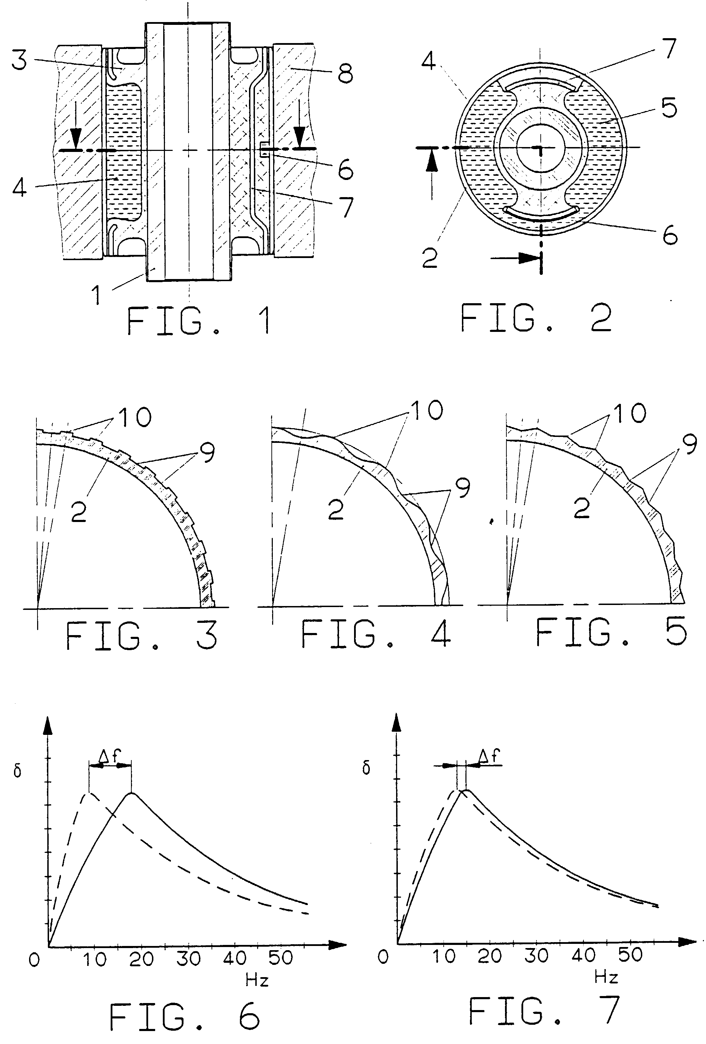

Das Ausführungsbeispiel zeigt eine Hülsengummifeder aus einem metallischen Innenteil 1, einem ebenfalls metallischen Außenrohr 2 und einem dazwischen angeordneten Gummikörper 3. In diesen Gummikörper 3 eingeformte Hohlräume bilden wenigstens zwei mit Flüssigkeit gefüllte Kammern 4 und 5, die durch einen Überströmkanal, Drosselkanal 6 oder dergleichen miteinander verbunden sind. Der Drosselkanal 6 befindet sich auf der Innenseite zwischen dem Außenrohr 2 und einer in den Werkstoff des Gummikörpers 3 eingebetteten Zwischenhülse 7, welche im Bereich der mit Flüssigkeit gefüllten Kammern 4 und 5 fensterförmige Ausschnitte aufweist. Das Außenrohr 2 der Hülsengummifeder ist in eine Aufnahmebohrung eines in Figur 1 lediglich angedeuteten Fahrzeugteiles 8 einpreßbar.

Um einerseits einen festen Sitz des Außenrohres 2 in der Aufnahmebohrung des Fahrzeugteiles 8 zu erreichen und dabei andererseits eine innere Verformung durch den gegenüber dem Innendurchmesser der Aufnahmebohrung ein leichtes Übermaß aufweisenden Außendurchmesser des Aufnahmerohres 2 zu vermeiden, sind am Außenumfang des Außenrohres 2 in Achsrichtung parallel zueinander und somit auch parallel zur Einpreßrichtung verlaufende Riefen 9, Rillen, Nuten oder dergleiche Vertiefungen vorgesehen, so daß ein theoretisch über die Spitzen der zwischen den Riefen 9 oder dergleichen liegenden Rippen 10 geschlagener Kreis gegenüber dem Innendurchmesser der Aufnahmebohrung ein Übermaß und ein theoretisch durch die Tiefpunkte der Riefen 9 oder dergleichen geschlagener Kreisbogen gegenüber dem Innendurchmesser der Aufnahme ein Untermaß aufweist. Dadurch wird der beim Einpressen des Außenrohres ausweichende Werkstoff der Rippen 10 oder dergleichen in die durch die Riefen 9 oder dergleichen gebildeten Freiräume verdrängt. Eine Verformung des Innendurchmessers des Außenrohres 2 kann aufgrund der geometrischen Gestaltung und Auslegung der Rippen 10 oder dergleichen kontrolliert erfolgen. Der dadurch erzielte Vorteil für die optimale Abstimmung der Hülsengummifeder für den praktischen Einsatz ergibt sich aus einem Vergleich der Figuren 6 und 7. In der Figur 6 ist die Veränderung des Dämpfungsmaximums durch die Montage bei einer Hülsengummifeder nach dem Stande der Technik dargestellt, während die Figur 7 die demgegenüber lediglich geringfügige Veränderung der Frequenz des Dämpfungsmaximums durch die Montage einer Hülsengummifeder nach der Erfindung wiedergibt. Die in der Figur 7 noch erkennbare Veränderung ist im praktischen Betrieb nicht feststellbar. Das Außenrohr besteht vorteilhaft aus Aluminium oder eventuell aus Kunststoff oder Stahl.

### BEZUGSZEICHENLISTE:

- 1: Innenteil
- 2: Außenrohr
- 3: Gummikörper
- 4: Flüssigkeitskammer
- 5: Flüssigkeitskammer
- 6: Überströmkanal, Drosselkanal
- 7: Zwischenrohr
- 8: Fahrzeugteil
- 9: Riefe
- 10: Rippe

## Patentansprüche

1. Hydraulisch dämpfende Hülsengummifeder aus einem in eine Aufnahmebohrung eines Kraftfahrzeugteiles (8) einpreßbaren, metallischen Außenrohr (2), einem mit einem zweiten Kraftfahrzeugteil verbindbaren metallischen Innenteil (1) und einem dazwischen angeordneten Gummikörper (3), welcher mehrere, nach außen abgedichtete, mit einer Flüssigkeit gefüllte Kammern (4,5) aufweist, die durch Überströmkanäle oder Drosselkanäle (6) miteinander verbunden sind, die radial außenseitig durch die im wesentlichen glatte Innenwandung des Außenrohres (2) begrenzt sind, dadurch gekennzeichnet, daß am Außenumfang des gegenüber dem Durchmesser der Aufnahmebohrung in dem Fahrzeugteil (8) ein geringes Übermaß aufweisenden Außenrohres (2) in Einpreßrichtung längsverlaufende Riefen (9), Rillen oder Nuten vorgesehen sind, wobei der Kontakt des eingepreßten Außenrohres (2) mit der Wandung der Aufnahmebohrung im Fahrzeugteil (8) linienförmig mit zwischen den linienförmigen Berührungen liegenden Freiräumen ausgebildet ist.

2. Hülsengummifeder nach Anspruch 1, dadurch gekennzeichnet, daß die längsverlaufend angeordneten Riefen (9), Rillen oder Nuten an der Außenfläche eines Außenrohres (2) aus Aluminium vorgesehen sind.

## Claims

1. Hydraulically damping sleeve-type rubber spring, comprising an outer metal tube (2) pressable into a location hole of a motor vehicle part (8), a metal inner part (1) connectable to a second motor vehicle part and, disposed between said parts, a rubber body (3) having a plurality of externally sealed chambers (4, 5), which are filled with a liquid and connected to one another by overflow channels or throttle channels (6), which are delimited radially at the outside by the substantially smooth inner wall of the outer tube (2), characterized in that provided in the outer periphery of the outer tube (2), which has a slight oversize compared to the diameter of the location hole in the motor vehicle part (8), are furrows (9), flutes or grooves extending longitudinally in press-in direction, the contact of the pressed-in outer tube (2) with the wall of the location hole in the motor vehicle part (8) being line contact with free spaces lying between the points of line contact.

2. Sleeve-type rubber spring according to claim 1, characterized in that the furrows (9), flutes or grooves arranged in a longitudinally extending manner are provided in the outer surface of an outer tube (2) made of aluminium.

## Revendications

1. Ressort à caoutchouc et à douille amortissant de façon hydraulique, et constitué d'un tube externe (2) métallique pouvant être inséré par enfoncement dans un perçage de réception d'une pièce (8) de véhicule automobile, d'une pièce interne (1) métallique pouvant être reliée à une deuxième pièce de véhicule automobile et d'un corps en caoutchouc (3) disposé entre les deux, et qui présente plusieurs chambres (4, 5) remplies d'un liquide et étanches vers l'extérieur, les chambres étant reliées entre elles par des conduits de trop-plein ou des conduits (6) d'étranglement, les conduits étant délimités radialement côté externe par la paroi interne essentiellement lisse du tube externe (2), caractérisé en ce que sur le pourtour externe du tube externe (2) présentant par rapport au diamètre du perçage de réception situé dans la pièce (8) de véhicule une faible surmesure, des rainures (9), des cannelures ou gorges sont prévues qui s'étendent de façon longitudinale dans la direction d'enfoncement, le contact du tube externe (2) enfoncé avec la paroi du perçage de réception situé dans la pièce (8) de véhicule étant réalisé sous forme de lignes avec des espaces libres situés entre les contacts en forme de ligne.

2. Ressort à caoutchouc et à douille selon la revendication 1, caractérisé en ce que les rainures (9), les cannelures ou les gorges, disposées de façon à s'étendre longitudinalement, sont prévues sur la surface externe d'un tube externe (2) réalisé en aluminium.
